# NEUE EUROPÄISCHE PATENTSCHRIFT

(11) **EP 0 270 550 B2**
(45) Veröffentlichungstag und Bekanntmachung des Hinweises auf die Entscheidung über den Einspruch: **05.07.1995**
(45) Hinweis auf die Patenterteilung: 30.01.1991
(21) Anmeldenummer: 86905746.3
(22) Anmeldetag: 16.10.1986
(51) Int. Cl.: B01D 46/04

(54) **VORRICHTUNG ZUR REINIGUNG VON FILTERSCHLÄUCHEN**
DEVICE FOR CLEANING FILTER BAGS
DISPOSITIF DE NETTOYAGE DE SACS FILTRANTS

(30) Priorität: 19.10.1985 DE 3537226
(43) Veröffentlichungstag der Anmeldung: 15.06.1988
(73) Patentinhaber: Stanelle, Karl-Heinz, D-74363 Güglingen (DE)
(72) Erfinder: Stanelle, Karl-Heinz, D-74363 Güglingen (DE)
(74) Vertreter: Müller, Hans, Dipl.-Ing.
(86) Internationale Anmeldenummer: DE8600415
(87) Internationale Veröffentlichungsnummer: WO8702268

(56) Entgegenhaltungen:
- EP-A- 0 014 987
- DE-A- 2 708 947
- GB-A- 1 432 353
- US-A- 3 073 097
- Miels-Heft HRB Nr. 1465

## Beschreibung

### Technisches Gebiet

Die Erfindung betrifft eine Vorrichtung zum Reinigen des Entstaubungsfilters eines Silos mittels in die Filterschläuche des Filters stoßweise eingeblasener Luft, wobei der Reinigungsvorgang, bei dem in jeden Filterschlauch einmal Luft eingeblasen wird, bei einem vorbestimmbaren Überdruck im Silo durchgeführt und, sofern danach dieser Überdruck im Silo noch vorhanden ist, wiederholt wird, und wobei in ein oder mehrere, jedoch nicht in alle vorhandenen Filterschläuche gleichzeitig Luft eingeblasen wird.

Ein derartiger Entstaubungsfilter wird für die Filtrierung der Abluft beim pneumatischen Befüllen eines Silos mit einem pulverförmigen Schüttgut wie z. B. Zement eingesetzt. Während des Füllvorganges strömt die beim Befüllen als Trägermedium eingesetzte Luft zusammen mit dem Füllmaterial von außen gegen die Filterfläche des Filters. Da lediglich die Luft durch den Filterschlauch hindurch ins Freie entweichen kann, lagert sich auf der Außenseite der Filterfläche das Füllgut ab. Dadurch erhöht sich der Durchlaßwiderstand der Filterschläuche entsprechend dem Grad ihrer Beaufschlagung mit Füllgut. Dies führt dazu, daß sich der im Silo herrschende Druck erhöht. Durch zwangsweises Öffnen eines am Silo vorhandenen Überdruckventils wird verhindert, daß der Überdruck im Silo eine die Festigkeit des Silos beeinträchtigende Größe erreichen kann. Sofern sich diese Zwangsentlüftung während eines Befüllvorganges einstellt, wird aus dem Silo mit der Luft auch Füllgut ausgeblasen, was sowohl aus wirtschaftlichen Gründen als auch insbesondere wegen der dadurch bewirkten Umweltverschmutzung im höchsten Maße unerwünscht ist.

### Stand der Technik

Aus der GB-A-1 432 353 und US-A-3 073 097 sind Filter der eingangs genannten Art in Form von oben offenen Filterschläuchen oder Filterpatronen bekannt. Das aus dem Trägermedium wie z. B. der Luft und dem Füllgut bestehende Rohgas strömt von außen gegen die allseitig verschlossene Filterfläche. Dabei lagert sich das Füllgut an der Filterfläche ab, so daß nur das Reingas in das Innere der Filterschläuche eindringen und dort durch die oben offenen Filterschläuche aus dem Silo entweichen kann. Zum Reinigen der Filterschläuche wird in die einzelnen Filterschläuche von oben stoßartig Druckluft eingeblasen, wobei sich das an der Außenseite der Filterschläuche abgelagerte Füllgut von den Wänden der Filterschläuche löst und in das Silo zurückfällt. Die Regelung des Reinigungsvorganges kann elektrisch oder pneumatisch erfolgen. Der Reinigungsvorgang wird immer nur bei einem vorbestimmten Überdruck ausgelöst. Das mittels der Druckluft von der Außenseite der Filter abgelöste Füllgut fällt nicht vollständig in den Siloraum hinunter, sondern lagert sich unweigerlich zumindest teilweise an der Außenseite benachbarter oder des gleichen Filters ab. Nach Abfallen des Drucks im Silo unter den Wert, bei dem der Reinigungsvorgang ausgelöst wird, sind dadurch mehr oder weniger verschmutzte Filter vorhanden. Bei Silos, die in größeren Zeiträumen nur befüllt werden, weil die Entnahme von Füllgut aus ihnen verhältnismäßig langsam erfolgt, sind die Filterschläuche in dem Zeitraum zwischen zwei Füllvorgängen in diesem verschmutzten Zustand vorhanden. Das Füllgut kann in diesem Zeitraum an den Filterschläuchen anbacken, was sich auf die Lebensdauer der Filter umso nachteiliger auswirkt, je höher die Luftfeuchtigkeit und je länger die Zeiträume zwischen zwei Füllvorgängen für ein Silo sind.

Aus der DE-A-2 708 947 ist ein Verfahren zum Entstauben eines Filters im Bergbau bekannt, bei dem die Druckluft, mit dem der einzelne Filter zum Reinigen beaufschlagt wird, in seiner Intensität variabel gestaltet wird. Auch bei diesem Verfahren wird der Reinigungsvorgang nur bei einem vorbestimmten Überdruck ausgelöst, so daß auch hier die Filter nach Beendigung eines Reinigungsvorganges mehr oder weniger verschmutzt vorhanden sind.

Aus dem Miels-Heft HRB Nr. 1465 ist ein elektrisches Steuergerät bekannt, das der eingangs genannten Vorrichtung entspricht. Durch dieses Gerät wird beim Überschreiten eines vorbestimmbaren ersten Überdruckes der Reinigungsvorgang ausgelöst. Der Reinigungsvorgang läuft so lange ab, bis ein gegenüber dem ersten Überdruck niedriger zweiter Überdruck erreicht ist.

Aus der EP-A 0 014 987 ist ein als Gegenspülvorgang bezeichneter Reinigungsprozeß von Filtern bekannt. Diese Filter werden üblicherweise in Mühlen eingesetzt und können bis zu 1000 Filterschläuche haben. Das Reinigen bzw. Spülen der Filterschläuche erfolgt in einer zyklischen Reihenfolge in bestimmten Zeitabständen und mit einer bestimmten Spülstoßdauer. Das bedeutet, daß abhängig von den jeweiligen Betriebsbedingungen die Parameter für den Reinigungsprozeß jeweils voreingestellt bzw. nachträglich in abgeänderter Weise neu eingestellt werden können. Nach Beendigung des Spülvorganges kann durch einen von den Taktsignalen einer elektrischen Steuereinheit in Gang zu setzenden Abklopfhammer der unterhalb der Filterschläuche vorhandene Austragtrichter von an diesem Trichter anhaftendem Füllgut befreit werden. Mit dem Abklopfhammer wird eine Reinigungswirkung für die Filterschläuche nicht bezweckt und auch nicht ermöglicht.

### Darstellung der Erfindung

Der Erfindung liegt die Aufgabe zugrunde, das Reinigen der Filterschläuche oder Filterpatronen bei dem Entstaubungsfilter eines Silos mit einfachen Mitteln so zu gestalten, daß nach Beendigung eines Reinigungsvorganges alle Filter in möglichst gereinigtem Zustand vorhanden sind.

Diese Aufgabe wird erfindungsgemäß durch die in Anspruch 1 angegebene Vorrichtung gelöst. Diese Vorrichtung ermöglicht, daß ein weiterer Reinigungsvorgang in Abhängigkeit von den durch den erfindungsgemäß vorgesehenen Luftspeicher bestimmten Bedingungen, aber unabhängig vom Druck im Silo, durchgeführt werden kann. Dadurch wird sichergestellt, daß nach Abfallen des Überdrucks in einem Silo die Filterschläuche noch weiter gereinigt werden und zwar durch weiteres stoßweises Einblasen von Druckluft in die einzelnen Filterschläuche hinein. Bei Beginn eines Füllvorganges in ein Silo auch nach längeren Standzeiten desselben sind Filter vorhanden, an denen praktisch kein Füllgut anhaftet. Die Anzahl der Nachreinigungszyklen, die umso größer ist, je beispielsweise mehliger das Füllgut ist, kann so gewählt werden, daß praktisch kein Füllgut nach Beendigung eines Reinigungsvorganges an den Filterschläuchen anhaftet.

Die erfindungsgemäße Vorrichtung ist weiterhin sehr vorteilhaft in Fällen, wo ein Silo aus einem Füllfahrzeug heraus vollständig befüllt wird. Zum Abschluß des eigentlichen Füllvorganges wird nämlich regelmäßig die Luftzufuhr zunächst unterbrochen. In diesem Zustand herrscht im Silo ein bestimmter Überdruck, der nicht so hoch zu sein braucht, daß noch einmal ein Reinigungsvorgang ausgelöst wird. Die Filter sind daher in aller Regel mehr oder weniger mit Füllgut behaftet vorhanden. Bevor das Füllfahrzeug sich vom Silo dann abkoppelt, wird regelmäßig noch einmal ein kräftiger Luftstrom durch alle Zufuhrleitungen in das Silo hineingeblasen, um die Leitungen möglichst vollständig zu entleeren. Dieser Luftstrom, in dem prozentual relativ wenig Füllgut vorghanden ist, führt sehr häufig dazu, daß sich das Überdruckventil öffnet und eine Staubwolke aus dem Silo ausgeblasen wird. Es hat sich herausgestellt, daß sich dieses mit Sicherheit nur vermeiden läßt, wenn vor dem abschließenden, nochmaligen Einblasen von Luft in das Silo hinein die Filterschläuche möglichst vollständig gereinigt vorhanden sind.

Sofern für die Durchführung des Reinigungsvorganges nur pneumatische Bauelemente verwendet werden, kann auf das Betreiben und Steuern des Silos mittels elektrischer Energie verzichtet werden. Auf das Dach des Silos braucht dann keine elektrische Leitung hinaufgeführt zu werden. Dies verhindert das Auftreten von Unfällen, die bei der Handhabung mit elektrischen Bauteilen nie ganz ausgeschlossen werden können. Bedeutsam ist weiterhin, daß auch Betriebsstörungen infolge fehlerhafter elektrischer Teile ausgeschlossen sind. Die Störanfälligkeit eines derartigen Filters vermindert sich dadurch ganz erheblich.

Als vorteilhaft hat es sich schließlich herausgestellt, wenn jedem Filterschlauch eine luftausstoßende Düse derart zugeordnet ist, daß die aus einer bestimmten Düse ausgestoßene Luft nur durch den ihr zugeordneten Filterschlauch hindurchströmen kann. Das Freigeben von Luft aus einer einzelnen Düse heraus reinigt damit auch nur einen einzigen Filterschlauch, so daß bei einem nicht gleichzeitigen Ausblasen von Luft aus den vorhandenen Düsen niemals alle Filterschläuche gemeinsam mit Luft beaufschlagt werden können.

Während eines Reinigungsvorganges wird damit das Entweichen von Rohluft durch das Überdruckventil hindurch ausgeschlossen.

Weitere Ausgestaltung und Vorteile der Erfindung sind den in den Ansprüchen weiterhin aufgeführten Merkmalen zu entnehmen.

### Kurze Beschreibung der Zeichnungen

Die Erfindung wird im folgenden anhand der in der Zeichnung dargestellten Ausführungsbeispiele näher beschrieben und erläutert.

Es zeigen:
Fig. 1 in schematischer Darstellung einen auf dem Dach eines Silos angeordneten, oben offene Filterschläuche besitzenden Entstaubungsfilter, sowie ein Schaltschema zum Steuern der beim Reinigen dieser Filterschläuche benutzten Luft, nach einer ersten Ausführungsform und
Fig. 2 eine Darstellung entsprechend Fig. 1 nach einer zweiten Ausführungsform.

### Wege zur Ausführung der Erfindung

Auf einem Silodach 10 ist das hohlzylinderförmige Gehäuse eines Filters 12 monitert. Das Innere des Filters 12 bildet mit dem Inneren des Silos eine Einheit.

Von der oben verschlossenen Decke 14 des Silos ragen vier oben offene Filterschläuche 16, 18, 20, 22 nach unten in den Filter 12 hinein. Oberhalb jedes Filterschlauches 16, 18,20,22 ist eine Luftdüse 24, 26, 28, 30 so angeordnet, daß die Ausblasöffnung der jeweiligen Düse sich im Bereich der Öffnung des betreffenden Filterschlauches befindet. Jede Düse ist über eine Stichleitung 32,34,36,38 an einer Ringleitung 40 angeschlossen, die ihrerseits an einem Luft-Vorratsbehälter 41 und dieser über eine Zufuhrleitung 42 mit einem Kompressor in dauernd leitender Verbindung steht. Innerhalb jeder Stichleitung befindet sich ein Zweiwegeventil 44, 46, 48, 50, über das die Zufuhr der vom Kompressor kommenden Luft in die jeweilige Düse 24,26,28, 30 freigegeben bzw. gesperrt wird.

Von der Zufuhrleitung 42 zweigt eine Luftleitung 52 ab, die zu einem Schalter 54 führt. Dieser Schalter ist ein Zweiwegeventil, das über einen Tasthebel 56 gesteuert wird. Der Tasthebel 56 liegt auf einer Membrane 58 auf, die eine Aussparung gasdicht verschließt, die in der Decke 14 des Filters 12 vorhanden ist.

Von dem Schalter 54 führt eine weitere Luftleitung 60 zu einem Ventilblock 62. In dieser Luftleitung 60 ist ein Rückschlagventil 64 eingebaut, das lediglich die Luft vom Schalter 54 in Richtung Ventilblock 62 durchläßt. Von der Luftleitung 60 zweigt eine weitere Luftleitung 63 zu einem Luftspeicher 65 ab. Zwischen dem Ventilblock 62 und einem Ventil 44,46,48,50 besteht eine pneumatische Leitungsverbindung 66, 68, 70, 72 über die diese Zweiwegeventile gesteuert werden. Die Steuerung geschieht pneumatisch gegen eine das Ventil in seiner AUS-Stellung haltende Rückstellfeder.

Die Zufuhr von Luft vom Kompressor in den Vorratsbehälter 41 und von diesem durch die Düsen in die Filterschläuche hinein funktioniert auf folgende Weise:

An den Düsen liegt fortwährend über die Leitungen 42,40 Durckluft an. In Ruhestellung befinden sich die Ventile 44, 46, 48, 50 in ihrer in der Zeichnung dargestellten Sperr-Stellung, so daß die Luft nicht durch die Düsen in den jeweiligen Filterschlauch hineingeblasen werden kann.

Auch die Luftleitung 52 ist fortwährend mit Druckluft gefüllt. Sobald nun im Silo und damit im Inneren des Filters 12 sich ein bestimmter Überdruck aufgebaut hat, weil sich an der Außenseite der Filterschläuche eine bestimmte Menge an Füllstoffen abgelagert hat, wölbt sich die Membrane 58 so weit nach oben aus, daß sich über den sich ebenfalls nach oben verschiebenden Tasthebel 56 der Schalter 54 gegen die Kraft einer Rückstellfeder hin öffnet. Dadurch kann die Luft aus der Leitung 52 über die Leitung 60 sowohl in den Ventilblock 62 als auch über die Leitung 63 in den Luftspeicher 65 strömen. Von dem Ventilblock 62 strömt dann die Luft über die Leitungsverbindungen 66, 68, 70, 72 zu den Ventilen 44, 46,48,50. Die in dem Ventilblock 62 vorgesehene logische Schaltfunktion ist derart, daß die vier Ventile 44, 46, 48, 50 nacheinander geöffnet werden. Bevor dabei das nächste Ventil geöffnet wird, wird das vorherige Ventil geschlossen. Dadurch wird immer nur in einen Filterschlauch Luft hineingeblasen. Während dieses Blasvorganges steht der Luftspeicher 65 unter Überdruck.

Der Reinungsvorgang wird in aufeinanderfolgenden Zyklen solange wiederholt, wie die Membrane in ihrer hochgewölbten Stellung verharrt. Die dazu benötigte Luft wird dem Luftvorratsbehälter 41 entnommen. Sofern die Zufuhrleitung 42 ausreichen groß dimensioniert ist, kann allerdings auch auf diesen Vorratsbehälter 41 verzichtet werden. Sobald der Überdruck im Filter und damit auch der im Silo unter einen gewünschten Wert gefallen ist, und die Membrane 58 aus ihrer maximalen Wölbestellung wieder abgesunken ist, verschiebt sich der Tasthebel 56 ebenfalls nach unten, so daß der Schalter 54 seine in der Zeichnung dargestellte Lage einnimmt. In dieser Stellung wird die Luftzufuhr in die Leitung 60 unterbrochen. Nunmehr entweicht die Luft aus dem Luftspeicher 65 heraus. Infolge des Rückschlagventils 64 in der Leitung 60 kann diese Luft aus dem Luftspeicher 65 nur in den Ventilblock 62 hinein entweichen. Dadurch wird der Ventilblock 62 noch einmal mit Luft beaufschlagt, so daß noch einmal die Ventile 44, 46, 48, 50 in ihre EIN-Stellung vorschoben werden könne. Es findet dadurch noch einmal ein Reinigungsvorgang statt. Anschließend daran ist der Überdruck im Luftspeicher 65 abgebaut, so daß der Ventilblock 62 nicht mehr mit einer Steuerluft beaufschlagt werden kann. Dadurch wiederum ist der Reinigungsvorgang insgesamt abgeschlossen. Zu diesem Zeitpunkt sind die Filterschläuche vollständig gereinigt. Der nächste Reinigungsvorgang setzt erste ein, wenn sich wieder innerhalb des Filters 12 ein bestimmter Überdruck eingestellt und sich infolgedessen die Membran 58 um ein bestimmtes Maß ausgewölbt hat.

Kennzeichnend für den dargestellten Reinigungsvorgang ist, daß über die Membrane 58 zwei Reinigungsvorgänge geschaltet werden: In ihrer ausgewölbten Stellung schaltet die Membrane 58 direkt einen ersten Reinigungsvorgang ein, während sie über den Luftspeicher 65 in indirekter Weise in ihrer entspannten Stellung einen zweiten Reinigungsvorgang einleitet.

Die Anzahl der in einem Filter 12 angeordneten Filterschläuche oder -patronen hängt von der Größe des Filters 12 ab und ist keineswegs auf die in der Zeichnung dargestellten vier Filterschläuche festgelegt. Bei der Anordnung der Filterschläuche ist zu beachten, daß der gegenseitige Abstand so, groß gewählt wird, daß beim Reinigen eines Filterschlauches der von seiner Oberfläche ablösende Füllstoff nach unten in das Silo herabfällt und sich nicht an dem benachbarten Filterschlauch ansetzt.

Es ist nicht unbedingt erforderlich, daß jeweils immer nur in einen einzelnen Filterschlauch Luft eingeblasen wird. Es kann auch in zwei oder drei Filterschläuche gleichzeitig Luft eingeblasen werden. Wichtig ist nur, daß nicht in alle Filterschläuche gleichzeitig Luft eingeblasen wird und immer soviel Filterschlauchoberfläche noch zum Entweichen von Reinluft zur Verfügung steht, daß sich im Inneren des Silos kein das Überdruckventil öffnender Überdruck einstellen kann.

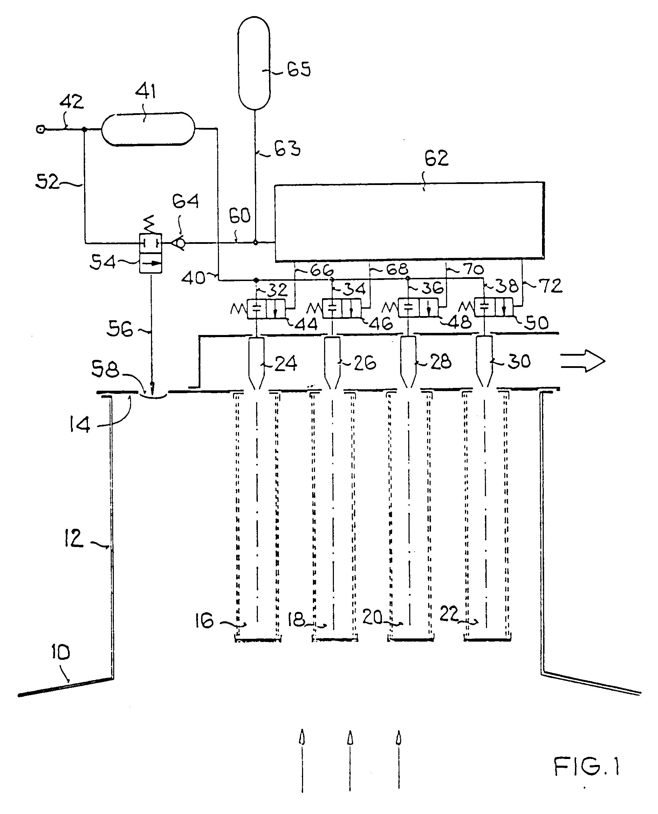

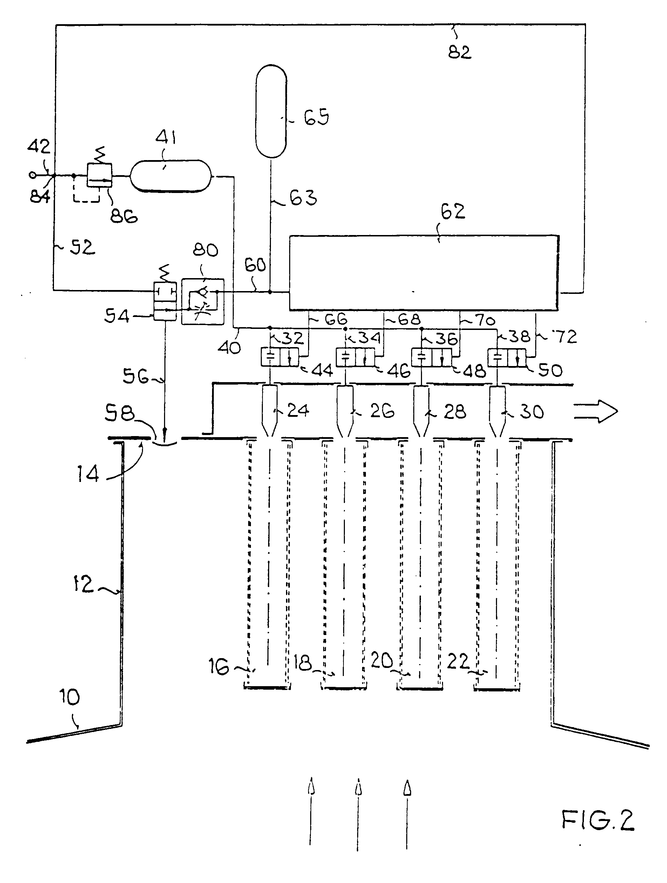

Die Darstellung gemaß Fig. 2 hat gegenüber der Darstellung gemäß Fig. 1 folgende Änderungen.

In der Leitung 60 ist in Fig. 2 kein Rückschlagventil wie in Fig. 1 vorhanden. Dafür ist an dem Schalter 54 in seiner Ausgangsstellung ein Drosselungsventil 80 vorhanden, das in der EIN-Stellung des Schalters 54 ein freies Durchströmen der Druckluft aus der Leitung 52 in die Leitung 60 hinein und damit weiter in den Ventilblock 62 sowie in den Luftspeicher 65 hinein gestattet. Ebenso wie in der Darstellung in Fig. 1 strömt dann die Luft über die Leitungsverbindungen 66, 68, 70, 72 in der EIN-Stellung des Schalters 54 zu den Ventilen 44, 46, 48, 50, so daß letztere geschaltet werden, wie vorstehend ausführlich bereits beschrieben. In der Gegenrichtung, d.h. in der Zeichnung nach links, kann die Luft aus dem Luftspeicher 65 durch die Leitung 63 und die Leitung 60 in Richtung zu dem Schalter 54 hin in ihrer Menge begrenzt werden. Damit ist es möglich, die Luftmenge, die aus dem Luftspeicher 65 in den Ventilblock 62 strömen soll, durch Verstellen des Drosselventiles 80 beliebig einzustellen. Damit ist auch die Luftmenge, die durch die Leitungen 66,68,70,72 zum Verstellen der Ventile 44,46, 48, 50 strömen soll, beliebig einzustellen. Das bedeutet, daß die Anzahl der Reinigungszyklen, die nach dem Abfallen der Membrane 58 und damit nach dem Absinken des Überdrucks im Silo 10 noch erfolgen soll, variabel eingestellt werden kann.

Die weitere Änderung in der Darstellung gemäß Fig. 2 berücksichtigt den Fall, daß die Ventile 44, 46, 48, 50 nicht gegen die Rückstellkraft einer Feder mit Druckluft aus der jeweiligen Leitung 66, 68, 70, 72 beaufschlagt werden. Um nun zu verhindern, daß die Ventile 44, 46, 48, 50 nach Beendigung eines Reinigungsvorganges in einer sog. "Schwimm" -Stellung verharren, in der sie weder ganz zu noch ganz auf sind, ist eine Leitung 82 vorhanden, mit der vor Beginn eines Reinigungsvorganges Druckluft in den Ventilblock 62 so eingeleitet wird, daß die Ventile 44, 46, 48, 50 in ihre AUS-Stellung gebracht werden, die ihrer normalen Stellung entspricht und die in der Fig. 2 dargestellt ist. Diese Leitung 82 zweigt von der Leitung 42 vor dem Luft-Vorratsbehälter 41 an der Stelle 84 ab. Zwischen der Stelle 84 und dem Luft-Vorratsbehälter 41 ist ein Drucksicherungsventil 86 in der Leitung 42 vorhanden. Dieses Ventil 86 öffnet sich erst, wenn sich in der Leitung 82 ein bestimmter Überdruck eingestellt hat. Bevor Druckluft damit in die Leitung 40 und damit zu den Ventilen 44,46,48,50 strömen kann, ist Druckluft bereits durch die Leitung 82 in den Ventilblock 62 geströmt und hat die Ventile 44,46, 48, 50 in ihre in Fig. 2 dargestellte Position gebracht, sofern sie in dieser Position nicht bereits waren. Die durch die Leitung 40 an diesen Ventilen anliegende Druckluft kann damit nicht durch die Düsen 24, 26, 28, 30 unkontrolliert auströmen. Der Reinigungsvorgang selber läuft dann wie bereits vorstehend beschrieben ab.

## Patentansprüche

1. Vorrichtung zum Reinigen des Entstaubungsfilters eines Silos mittels in die Filterschläuche (16, 18, 20, 22) des Filters stoßweise eingeblasener Luft, wobei der Reinigungsvorgang, bei dem in jeden Filterschlauch einmal Luft eingeblasen wird, bei einem vorbestimmbaren Überdruck im Silo durchgeführt und, sofern danach dieser Überdruck im Silo noch vorhanden ist, wiederholt wird, und wobei in ein oder mehrere, jedoch nicht in alle vorhandenen Filterschläuche gleichzeitig Luft eingeblasen wird, wobei
- einem Schaltglied (54), das in seiner EIN-Stellung einen Reinigungsvorgang einleitet, ein erstes Steuerglied (62) nachgeschaltet ist, durch welches die Zufuhr der Luft in die einzelnen Filterschläuche (16, 18, 20, 22) hinein regelbar ist, und dem Schaltglied (54) ein zweites Steuerglied (65) nachgeschaltet ist, welches in der EIN-Stellung des Schaltgliedes (54) derart aktivierbar ist, daß es in der AUS-Stellung des Schaltgliedes (54) seinerseits noch zumindest einen Schaltvorgang einleitet, wobei
- das Schaltglied (54) durch Verstellen eines Hebels (56), der auf einer auswölbbaren Membrane (58) anliegt, die eine Aussparung im Filtergehäuse (12) gasdicht verschließt, derart betätigbar ist, daß das Schaltglied (54) in seine EIN-Stellung bringbar ist, sobald sich bei einem vorbestimmbaren Überdruck im Silo und damit auch im Filtergehäuse die Membran (58) auswölbt und dadurch den Hebel (56) ausreichend weit verschiebt, wobei
- als zweites Steuerglied ein Luftspeicher (65) vorhanden ist, der während der EIN-Stellung des Schaltgliedes (54) mit Luft gefüllt wird, wobei diese Luft in der AUS-Stellung des Schaltgliedes (54) dem ersten Steuerglied (62), welches die Zufuhr der Luft in die einzelnen Filterschläuche regelt, zugeführt wird, so daß
- nach dem Absinken des vorbestimmbaren Überdruckes noch einmal zumindest ein Reinigungsvorgang durchgeführt wird.

2. Vorrichtung nach Anspruch 1,
**dadurch gekennzeichnet,** daß der Reinigungsvorgang nur mit pneumatischen Bauelementen durchführbar ist.

3. Vorrichtung nach Anspruch 1 oder 2,
**dadurch gekennzeichnet,** daß jedem Filterschlauch (16, 18, 20, 22) eine luftausstoßende Düse (24, 26, 28, 30) derart zugeordnet ist, daß die aus einer bestimmten Düse ausgestoßene Luft nur durch den ihr zugeordneten Filterschlauch hindurchströmen kann.

## Claims

1. Apparatus for cleaning the dust-removing filter of a silo by means of air blown in bursts into the filter tubes (16, 18, 20, 22) of the filter, the cleaning operation, in which air is blown once into each filter tube, being carried out at a predeterminable excess pressure in the silo and being repeated if this excess pressure still prevails in the silo thereafter, and air being blown into one or more, but not all, existing filter tubes at any particular time,
- a switch element (54) which, in its ON position, initiates a cleaning operation being followed by a first control element (62) which can regulate the supply of air into the individual filter tubes (16, 18, 20, 22), and the switch element (54) being followed by a second control element (65) which, when the switch element (54) is in the ON position, can be activated in such a way that, when the switch element (54) is in the OFF position, the control element (65) itself initiates at least one further switching [sic] operation,
- the switch element (54) being able to be actuated as a result of the adjustment of a lever (56) resting against an expandable diaphragm (58) which closes a recess in the filter housing (12) in a gas-tight manner, in such a way that the switch element (54) can be brought into its ON position as soon as, at a predeterminable excess pressure in the silo and therefore also in the filter housing, the diaphragm (58) bulges out and thereby shifts the lever (56) sufficiently far,
- an air accumulator (65) filled with air during the time when the switch element (54) is in the ON position being present as a second control element, and when the switch element (54) is in the OFF position this air is fed to the first control element (62) which regulates the supply of air into the individual filter tubes, so that
- after the lowering of the predeterminable excess pressure at least one cleaning operation is carried out once again.

2. Apparatus according to Claim 1, characterized in that only pneumatic structural elements can be used for carrying out the cleaning operation.

3. Apparatus according to Claim 1 or 2, characterized in that an air-ejecting nozzle (24, 26, 28, 30) is assigned to each filter tube (16, 18, 20, 22), in such a way that the air ejected from a specific nozzle can flow only through the filter tube assigned to it.

## Revendications

1. Procédé de nettoyage du filtre de dépoussiérage d'un silo au moyen d'air soufflé par saccades dans les sacs filtrants (16, 18, 20, 22) du filtre, dans lequel le processus de nettoyage pour lequel de l'air est soufflé une fois dans chaque sac filtrant est exécuté à une surpression dans le silo qui peut être prédéterminée et est répété pour autant qu'ensuite cette surpression est encore présente dans le silo, et dans lequel de l'air est soufflé en même temps dans un ou dans plusieurs sacs filtrants présents mais pas dans tous, tandis que :
- en aval d'un organe de commutation (54) qui déclenche dans sa position MARCHE un processus de nettoyage est branché un premier organe de commande (62) qui permet de réguler l'apport d'air dans les sacs filtrants individuels (16, 18, 20, 22), et en aval de l'organe de commutation (54) est branché un second organe de commande (65) qui, lorsque l'organe de commutation (54) est en position MARCHE, peut être activé de telle sorte qu'il déclenche encore au moins une opération de commutation lorsque l'organe de commutation (54) se trouve pour sa part en position ARRET, tandis que
- l'organe de commutation (54) peut être actionné par déplacement d'un levier (56) qui repose sur une membrane (58) gonflable fermant de manière étanche aux gaz un évidement du caisson de filtre (12), de telle sorte que l'organe de commutation (54) puisse être amené dans sa position MARCHE dès que la membrane (58) se gonfle à une surpression prédéterminable dans le silo et donc également dans le caisson de filtre, et déplace ainsi suffisamment le levier (56), tandis que
- il existe une réserve d'air (65) servant de second organe de commande et qui est remplie d'air lorsque l'organe de commutation (54) se trouve en position MARCHE, cet air étant amené vers le premier organe de commande (62) qui régule l'apport d'air dans les sacs filtrants individuels lorsque l'organe de commutation (54) est dans la position ARRET, de sorte que
- lorsque la surpression prédéterminable est tombée, au moins un processus de nettoyage est encore effectué.

2. Dispositif selon la revendication 1, caractérisé en ce que le processus de nettoyage ne peut être exécuté qu'avec des composants pneumatiques.

3. Dispositif selon la revendication 1 ou 2, caractérisé en ce qu'à chaque sac filtrant (16, 18, 20, 22) est associé un ajutage (24, 26, 28, 30) d'expulsion d'air par saccades, de telle sorte que l'air expulsé hors d'un ajutage déterminé ne peut traverser que son sac filtrant associé.
